# EUROPEAN PATENT SPECIFICATION

(11) **EP 1 703 800 B1**
(45) Date of publication and mention of the grant of the patent: **20.02.2008**
(21) Application number: 04803991.1
(22) Date of filing: 15.12.2004
(51) Int. Cl.: A23F 3/14, A23F 3/06, A23F 3/08

(54) **PROCESS FOR THE MANUFACTURE OF A TEA PRODUCT AND PRODUCTS OBTAINED THEREBY**
VERFAHREN ZUR HERSTELLUNG EINES TEEPRODUKTS UND DAMIT ERHALTENE PRODUKTE
PROCEDE POUR PRODUIRE UN PRODUIT A BASE DE THE ET PRODUITS AINSI OBTENUS

(30) Priority: 16.01.2004 IN MU20040047; 14.04.2004 GB 0408250; 14.04.2004 GB 0408249
(43) Date of publication of application: 27.09.2006
(73) Proprietor: UNILEVER PLC, London, Greater London EC4P 4BQ (GB); UNILEVER N.V., 3013 AL Rotterdam (NL)
(72) Inventor: NARAYANAN, Venkatraj, V., Hindustan Lever Rch. Ctr, Bangalore 560 066 (IN); RAMASWAMY, Seethalakshmi, Hindustan Lever Rch. Ctr, Bangalore 560 066 (IN); SHARMA, Navin, Kumar, Hindustan Lever Research Ctr, Bangalore 560 066 (IN)
(74) Representative: Hugot, Alain
(86) International application number: PCT/EP2004/014382
(87) International publication number: WO 2005/067727

(56) References cited:
- EP-A- 0 481 262
- WO-A-00/47056
- WO-A-20/04082390
- US-A1- 2001 033 880
- PATENT ABSTRACTS OF JAPAN vol. 015, no. 248 (C-0843), 25 June 1991 (1991-06-25) & JP 03 080045 A (SHIZUOKA PREFECTURE), 4 April 1991 (1991-04-04)
- GABUNIYA TK, TSOTSIASHVILI MI: "Production of black tea" DERWENT, 1990, XP002173587

## Description

### Field of the Invention

This invention relates to a process for obtaining cold water infusible or extractable tea starting with black tea as the raw material, wherein the products obtained have improved red colour and infuse rapidly.

### Background of the Invention

Leaf tea may be prepared as green leaf tea or black leaf tea. Generally, to prepare black leaf tea, fresh green leaves of the plant *Camellia sinensis* are withered (a process to allow the plucked tea leaves to lose moisture and bring about chemical / biochemical changes especially in aroma), macerated, fermented (in which process enzymes in the tea leaf use atmospheric oxygen to oxidise various substrates to produce coloured products) and then dried at high temperature (to inactivate the enzymes). Green tea manufacture does not involve a fermentation process although partial fermentation may be used to produce intermediate-type teas known as "oolong" tea.

Tea is consumed as a hot beverage or as a cold beverage (for example iced tea). The numerous compounds in the leaves that give the beverage its unique organoleptic properties are only sparingly soluble in cold water therefore tea is usually infused in water at temperatures close to 100°C.

Cold water soluble teas are usually prepared by spray drying the liquor obtained by extraction of black tea or fibres generated during the black tea manufacturing process. However, this process requires high temperatures or treatment with harsh chemicals like alkalis, which adversely affect the tea attributes like taste, colour and flavour.

WO 01/70038 (Unilever, 2001) concerns a process for manufacturing a cold water infusible black leaf tea comprising macerating freshly plucked tea leaves, allowing them to ferment, firing the leaves to arrest fermentation and then drying them to yield black leaf tea. The process is characterised in that the tea leaves are treated with a solubilising compound selected from the group consisting of ascorbic acid, dehydroascorbic acid, L-scorbamic acid or 5-phenyl-3,4-diketo-gamma-butyrolactone, preferably during the maceration step. The black leaf tea so produced is soluble in water at 5 to 100°C. The teas have a good red colour. The publication also teaches that the tea leaves are preferably treated with the solubilising compound in the presence of oxidative enzymes and/or hydrogen peroxide to enhance the tea flavour and colour.

Despite the fact that the technology disclosed in WO 01/70038 represents a significant improvement in producing leaf teas that infuse rapidly and have good red colour, there is a need to produce teas with improved properties starting with black tea as the raw material. Black tea is a comparatively stable product and a process using black tea as the raw material can be carried out at a location far remote from the tea gardens, greatly increasing process flexibility.

EP 0 481 262 A (Societe des Produits Nestle, 1992) discloses oxidation of black tea leaves which contain moisture only in an amount such that the oxidation reaction occurs at localized sites on and within the tea leaf structure.

Surprisingly, we have found that treating black tea with ascorbic acid and an oxidising agent, followed by drying, can produce a tea product infusible in cold water to provide a rich bright red coloured infusion in a short time.

### Summary of the Invention

According to the first aspect of the invention, there is provided a process for manufacturing a tea product comprising contacting black tea with ascorbic acid its salts or mixtures thereof, an oxidizing agent and water for a period of at least 5 minutes followed by drying to prepare a tea product that is infusible in water at 5 to 100°C.

According to a preferred embodiment of the invention, there is provided a process for manufacturing a black tea product comprising contacting black tea with amounts of, by weight of black tea 1 to 8% ascorbic acid its salts or mixtures thereof and 0.3 to 7% of an oxidizing agent for a period of at least 5 minutes followed by drying to less than 5% moisture to prepare a black tea that is infusible in water at 5 to 100°C. Wherein the ascorbic acid its salts or mixtures thereof and the oxidizing agent are contacted with the black tea as aqueous solutions.

Preferably the black tea is additionally contacted with an amount of 0.1 to 8% (by weight of black tea) of one or more amino acids prior to drying. Preferably also the one or more amino acids are added as an aqueous solution.

According to a further preferred embodiment of the invention, there is provided a process for manufacturing a tea product comprising of contacting black tea with amounts of, by weight of black tea 2 to 4% ascorbic acid its salts or mixtures thereof and 0.3 to 5% of hydrogen peroxide for a period of 5 minutes to 24 hours followed by drying to less than 5% moisture to prepare a tea product that is infusible in water at 5 to 100°C. Wherein the ascorbic acid its salts or mixtures thereof and the oxidizing agent are contacted with the black tea as aqueous solutions.

Preferably the black tea is additionally contacted with an amount of 0.1 to 2% (by weight of black tea) of one or more amino acids prior to drying. Preferably also the one or more amino acids are added as an aqueous solution.

The tea so obtained is cold water and hot water infusible/extractable and the infusion/extract shows improved red colour. The tea also infuses quickly into the water.

It is particularly preferred that the black tea is first contacted with the ascorbic acid its salts or mixtures thereof and the one or more amino acids (if used) before it is contacted with the oxidising agent.

### Detailed Description of the Invention

"Tea" for the purposes of the present invention means leaf material from *Camellia sinensis var*. *sinensis* or *Camellia sinensis var. assamica*. It also includes rooibos tea obtained from *Aspalathus linearis* however that is a poor source of endogenous fermenting enzymes. "Tea" is also intended to include the product of blending two or more of any of these teas.

"Leaf tea" for the purposes of this invention means a tea product that contains one or more tea origins in an uninfused form.

"Cold water infusible" for the purposes of this invention means giving good colour, flavour and mouthfeel in a short infusion time i.e. less than 10 minutes, but preferably less than 5 minutes at a temperature at or between 5 and 30°C.

For the avoidance of doubt the word "comprising" is intended to mean including but not necessarily "consisting of" or "composed of". In other words the listed steps or options need not be exhaustive.

Tea manufacture, especially black tea manufacture, traditionally comprises: withering, macerating, fermenting and firing. Black tea for the purpose of the invention is obtained by the above process or by any other known process to prepare black tea.

The present invention concerns further treatment of the black tea obtained as described above to prepare a cold water infusible tea product. The treatment involves contacting black tea (leaf /dust) or secondaries or green leaf mixed black tea or off graded black tea or tea solids coated black tea with ascorbic acid its salts or mixtures thereof and an oxidising agent preferably hydrogen peroxide with or without peroxidase addition, in the presence of moisture, in order to enhance the infusion of the black tea in cold water. Preferably also, prior to drying, the black tea is contacted with one or more amino acids. All these agents are preferably added in the form of aqueous solutions. Alternately they may be dry mixed followed by addition of water. The tea is thus contacted for at least 5 minutes and preferably dried to less than 5% moisture. The solution can be applied singly or in split doses. The treatment is preferably given in the form of a spray or dip. The black tea can be treated either ex-drier mouth or after grading.

Ascorbic acid its salts or mixtures thereof including sodium or calcium salts are preferably added in an amount from 1% to 8% by weight of tea, more preferably from 2% to 4% by weight of tea. The ascorbic acid its salts or mixtures thereof are preferably added as an aqueous solution.

The amino acids that can optionally be used in this invention include one or more of, alanine, arginine, asparagin, cystine, glutamine, glycine, histidine, isoleucine, leucine, lysine, methionine, phenylalanine, serine, threonine, tryptophan, tyrosine and valine. The amino acids can be used singly or as a mixture. They are either mixed with ascorbic acid or can be added separately. The amount of amino acids is preferably between 0.1% to 8% by weight of tea, more preferably 0.1% to 2% by weight of tea. The resultant solution of ascorbic and amino acid can be applied singly or in split doses. The treatment is preferably given in the form of a spray or dip.

Preferably, aqueous solutions of ascorbic acid its salts or mixtures thereof and amino acids (if used) should be heated before contacting with tea, preferably to a temperature in excess of 50°C. The amount of water can be between 10% to 100% by weight of tea, more preferably 30% to 100% by weight of tea, most preferably 40% to 100%.

It is preferred that the oxidising agent is added to the black tea after the ascorbic acid and the amino acids (if used) are added. The oxidising agent may be hydrogen peroxide, calcium peroxide, magnesium peroxide, oxygen (other than oxygen dissolved from ambient air) or any compound, which can release oxygen under the process conditions. The oxidising agent may be an enzyme which can release hydrogen peroxide. Preferably the oxidising agent is hydrogen peroxide. The oxidising agent is preferably added in an amount of 0.3% to 7% by weight of tea. When the oxidising agent is hydrogen peroxide it may be added as a 10% to 75 % solution in water. Usually hydrogen peroxide is available at 30% hydrogen peroxide solution in water. The oxidising agent is more preferably added in an amount of from 0.3% to 5% by weight of tea. The solution can be applied singly or in split doses. The treatment is preferably given in the form of a spray or dip.

The ascorbic acid its salts or mixtures thereof, the oxidising agent and water are preferably kept contacted with black tea, a process step known as incubation, for a period of at least 5 minutes. The incubation may be carried out for a period of up to 24 hours. The incubation is preferably carried out at a temperature of 10 to 60°C.

The tea can be dried using any method/process known in the art, preferably giving tea with a moisture content of less than 5%.

Water infusions of the tea produced by the process described above in water at temperatures in the range of 5 to 100°C will give tea with superior colour and good flavour. Cold water infusions may be prepared at temperatures in the range 5 to 30°C.

It will be appreciated that the process of the invention can be advantageously used for improving the quality of and adding value to any low grade black teas without wastage.

The process of the invention shall now be described with reference to the following examples:

### Examples

### Example 1:

Ascorbic acid (3 g) was dissolved in 100 mL of hot water. This solution was further heated on a boiling water bath for 5 minutes. The hot solution was sprayed on 100 grams of black tea. About 5 mL of 30% hydrogen peroxide solution was added to it. This was incubated at 25 - 30°C for about 15 minutes followed by drying on a fluidised bed drier at 130 - 140°C to bring down the moisture to less than 5% on black tea basis.

### Example 2:

A process as per Example 1 was carried out and additionally 0.5 g phenylalanine was added to the 100 ml water.

### Comparative Example A:

100 grams of black tea was wetted with 100 mL hot water. This was incubated around 25 - 30°C for about 15 minutes followed by drying on a fluidised bed drier at 130 - 140°C to bring down the moisture to less than 5% on black tea basis.

### Comparative Example B:

A process as per Comparative Example A was carried out except that additionally 5 ml of 30% hydrogen peroxide was sprayed immediately after the addition of water.

### Comparative Example C:

A process as per Comparative Example A was carried out except that a solution of 0.5 g of phenylalanine in 100 mL water, which had been heated on a boiling water bath for 5 minutes, was sprayed on the tea instead of the 100 mL of water used in Comparative Example A.

### Comparative Example D:

A process as per Comparative Example C was carried out except that 3 g of ascorbic acid was used in place of 0.5 g of phenylalanine.

### Comparative Example E:

A process as per Example 1 was carried out except that 0.5 g of phenylalanine was used instead of 3 g of ascorbic acid.

### Comparative Example F:

Ascorbic acid (3 g) and phenylalanine (0.5 g) were dissolved in 100 mL hot water. This solution was heated on a boiling water bath for 5 min. The hot solution was sprayed on to 100 grams of black tea. This was incubated at 25 - 30°C for about 15 minutes followed by drying on a fluidised bed drier at 130 - 140°C to bring down the moisture to less than 5% on black tea basis.

The teas thus prepared in Comparative Examples A to F and Examples 1 and 2 were tested for infusion in water by the following method:

### Process for preparing cold water infusions

1 g of each black tea sample was infused in 100 ml of water at 25°C for 5 minutes. The solutions were filtered to give cold tea infusions and the colour of infusions obtained from was measured using a Hunter Lab Ultrascan XE^{™} colorimeter in the transmittance mode. The data is presented in Table 1.

### Colour measurements

L*a*b* measurements for colour were carried out on Hunterlab UltraScan XE^{™} colorimeter under the following conditions:

Cuvette - 2 cm (Quartz), Mode - Transmittance, Illuminant - D65, Observer - 10, Scale - CIELAB. The reflectance at 520 nm was also determined.

50 ml of the brew was taken in a 2 cm quartz cuvette, transmittance/reflectance was measured under the conditions mentioned above.

The a* values are reported as these denote redness of the tea. The higher the value, the redder the tea. 520 nm is the wavelength at which the red colour absorbs. The higher the absorbance value the greater the red colour.

**Table 1:**

| **Example** | **a*** | **Absorbance 520 nm** |
|---|---|---|
| 1 | 41.5 | 1.10 |
| 2 | 50.4 | 1.51 |
| A | 28.6 | 0.77 |
| B | 30.7 | 0.85 |
| C | 21.4 | 0.59 |
| D | 28.3 | 0.78 |
| E | 29.4 | 0.83 |
| F | 25.0 | 0.66 |

Data in Table 1 indicates that there is synergistic benefit in adding ascorbic acid and hydrogen peroxide to the black tea (Examples 1 and 2) compared to adding any one of these ingredients. Further benefit is found by additionally contacting the tea with the phenylalanine (Example 2).

### Rate of Infusion

The rate at which the tea infuses into cold water was also studied. The effect was studied for Comparative Example A and Examples 1 and 2. The colour of the infusion after 30 seconds, 3 and 5 minutes was determined. The data is presented in Table 2.

**Table 2:**

| **Example** | **Time (minutes)** | **a*** | **Absorbance (520 nm)** |
|---|---|---|---|
| A | 0.5 | 4.31 | 0.28 |
| | 3.0 | 18.91 | 0.55 |
| | 5.0 | 23.98 | 0.66 |
| 1 | 0.5 | 26.71 | 0.64 |
| | 3.0 | 30.27 | 0.73 |
| | 5.0 | 39.06 | 1.02 |
| 2 | 0.5 | 31.98 | 0.72 |
| | 3.0 | 45.24 | 1.17 |
| | 5.0 | 49.93 | 1.49 |

The data presented in Table 2 shows that the teas prepared by the process of the invention (Examples 1 and 2) infuse faster and give better red colour within a short period as compared to control teas. Again additional benefits are found when phenylalanine is used in combination with the ascorbic acid and hydrogen peroxide (Example 2).

### Aroma/Flavour enhancement - Head Space Gas Chromatography

The additional benefit of contacting the black tea with phenylalanine is demonstrated by measuring the levels of key pleasant flavoured molecules like Phenyl acetaldehyde and benzaldehyde. The data for the comparative examples and examples are given in Table 3.

**Table 3:**

| **Example** | **Phenyl acetaldehyde (Peak area)** | **Benzaldehyde (Peak area)** |
|---|---|---|
| 1 | 6679 | 50156 |
| 2 | 1770134 | 96077 |
| A | 15349 | 33937 |
| B | 11063 | 28654 |
| C | 9683 | 42449 |
| D | 8522 | 37137 |
| E | 153824 | 77466 |
| F | 75130 | 92055 |

### Comparative Example G:

An experiment as per Example 2 was carried out without using black tea and the colour a* was measured at zero, 30 and 60 minutes in comparison to Example 2 and Comparative Example A. The data is summarized in Table 4

**Table 4:**

| **Example** | **a* at zero time** | **a* after 30 minutes** | **a* after 60 minutes** |
|---|---|---|---|
| A | 21.79 | 17.17 | 15.84 |
| 2 | 50.63 | 54.27 | 53.65 |
| G | -0.38 | -0.62 | -0.79 |

Table 4 demonstrates that black tea is essential for producing the red colour.

It is thus possible by way of the present invention to produce a black leaf tea that infuses quickly in hot or cold water and provides for a good red colour.

## Claims

1. A process for the manufacture of a tea product comprising:
(i) contacting black tea with ascorbic acid its salts or mixtures thereof, an oxidizing agent and water for a period of at least 5 minutes; followed by
(ii)drying to prepare a tea product that is infusible in water at 5 to 100°C.

2. A process according to claim-1 wherein the black tea is contacted with aqueous solutions of the ascorbic acid its salts or mixtures thereof and the oxidising agent.

3. A process according to claim 1 or claim 2 wherein the ascorbic acid its salts or mixtures thereof is in an amount of 1 to 8% by weight of black tea.

4. A process according to claim 3 wherein the ascorbic acid its salts or mixtures thereof is in an amount of 2 to 4% by weight of black tea.

5. A process according to any of claims 1 to 4 wherein the oxidising agent is in an amount of 0.3 to 7% by weight of black tea.

6. A process according to claim 5 wherein the oxidising agent is in an amount of 0.3 to 5% by weight of black tea.

7. A process according to any of claims 1 to 6 wherein the oxidising agent is chosen from one or more of hydrogen peroxide, calcium peroxide, magnesium peroxide, oxygen, an enzyme which can release hydrogen peroxide.

8. A process according to claim 7 wherein the oxidising agent is hydrogen peroxide.

9. A process according to any of claims 1 to 8 wherein the oxidising agent is added after the addition of the ascorbic acid its salts or mixtures thereof to the black tea.

10. A process according to any of claims 1 to 9 wherein the black tea is contacted with the ascorbic acid its salts or mixtures thereof and the oxidising agent for an incubation period of 5 minutes to 24 hours.

11. A process according to any of claims 1 to 10 wherein the water is heated to a temperature of 10 to 60°C before contacting with black tea.

12. A process according to any of claims 1 to 11 wherein the black tea is dried to a moisture content of less than 5%.

13. A process according to any of claims 1 to 12 wherein the tea product is infusible in water at 5 to 30°C.

14. A process according to any of claims 1 to 13 wherein the black tea is additionally contacted with one or more amino acids prior to drying.

15. A process according to claim 14 wherein the one or more amino acids are in an amount of 0.1 to 8% by weight of black tea.

16. A process according to claim 15 wherein the one or more amino acids are in an amount of 0.1 to 2% by weight of black tea.

17. A process according to any of claims 14 to 16 wherein the one or more amino acids are chosen from one or more of alanine, arginine, asparagin, cystine, glutamine, glycine, histidine, isoleucine, leucine, lysine, methionine, phenylalanine, serine, threonine, tryptophan, tyrosine, valine.

18. A process according to any of claims 14 to 17 wherein the oxidising agent is added after the addition of the one or more amino acids to the black tea.

## Patentansprüche

1. Verfahren für die Herstellung eines Teeprodukts, umfassend:
(i) Kontaktieren von schwarzem Tee mit Ascorbinsäure, ihren Salzen oder Gemischen davon, einem Oxidationsmittel und Wasser für einen Zeitraum von mindestens 5 Minuten; gefolgt von
(ii) Trocknen, um ein Teeprodukt herzustellen, das in Wasser bei 5 bis 100°C aufgießbar ist.

2. Verfahren gemäß Anspruch 1, worin der schwarze Tee mit wässerigen Lösungen der Ascorbinsäure, ihren Salzen oder Gemischen davon und dem Oxidationsmittel kontaktiert wird.

3. Verfahren gemäß Anspruch 1 oder Anspruch 2, worin die Ascorbinsäure, ihre Salze oder Gemische davon in einer Menge von 1 bis 8% nach Gewicht von schwarzem Tee vorhanden ist.

4. Verfahren gemäß Anspruch 3, worin die Ascorbinsäure, ihre Salze oder Gemische davon in einer Menge von 2 bis 4% nach Gewicht von schwarzem Tee vorhanden ist.

5. Verfahren gemäß einem von Ansprüchen 1 bis 4, worin das Oxidationsmittel in einer Menge von 0,3 bis 7% nach Gewicht von schwarzem Tee vorhanden ist.

6. Verfahren gemäß Anspruch 5, worin das Oxidationsmittel in einer Menge von 0,3 bis 5% nach Gewicht von schwarzem Tee vorhanden ist.

7. Verfahren gemäß einem von Ansprüchen 1 bis 6, worin das Oxidationsmittel ausgewählt wird aus einem oder mehreren von Wasserstoffperoxid, Calciumperoxid, Magnesiumperoxid, Sauerstoff, einem Enzym, welches Wasserstoffperoxid freisetzen kann.

8. Verfahren gemäß Anspruch 7, worin das Oxidationsmittel Wasserstoffperoxid ist.

9. Verfahren gemäß einem von Ansprüchen 1 bis 8, worin das Oxidationsmittel nach der Zugaben der Ascorbinsäure, ihren Salzen oder Gemischen davon zu dem schwarzen Tee zugegeben wird.

10. Verfahren gemäß einem von Ansprüche 1 bis 9, worin der schwarze Tee mit der Ascorbinsäure, ihren Salzen oder Gemischen davon und dem Oxidationsmittel für einen Inkubationszeitraum von 5 Minuten bis 24 Stunden kontaktiert wird.

11. Verfahren gemäß einem von Ansprüchen 1 bis 10, worin das Wasser auf eine Temperatur von 10 bis 60°C vor Kontaktieren mit schwarzem Tee erhitzt wird.

12. Verfahren gemäß einem von Ansprüchen 1 bis 11, worin der schwarze Tee zu einem Feuchtigkeitsgehalt von weniger als 5% getrocknet wird.

13. Verfahren gemäß einem von Ansprüchen 1 bis 12, worin das Teeprodukt in Wasser bei 5 bis 30°C aufgießbar ist.

14. Verfahren gemäß einem von Ansprüchen 1 bis 13, worin der schwarze Tee zusätzlich mit einer oder mehreren Aminosäuren vor dem Trocknen kontaktiert wird.

15. Verfahren gemäß Anspruch 14, worin die eine oder mehreren Aminosäuren in einer Menge von 0,1 bis 8% nach Gewicht von schwarzem Tee vorhanden sind.

16. Verfahren gemäß Anspruch 15, worin die eine oder mehreren Aminosäuren in einer Menge von 0,1 bis 2% nach Gewicht von schwarzem Tee vorhanden sind.

17. Verfahren gemäß einem von Ansprüchen 14 bis 16, worin die eine oder mehreren Aminosäuren ausgewählt werden aus einer oder mehreren von Alanin, Arginin, Asparagin, Cystin, Glutamin, Glycin, Histidin, Isoleucin, Leucin, Lysin, Methionin, Phenylalanin, Serin, Threonin, Tryptophan, Tyrosin, Valin.

18. Verfahren gemäß einem von Ansprüchen 14 bis 17, worin das Oxidationsmittel nach der Zugabe der einen oder mehreren Aminosäuren zu dem schwarzen Tee zugegeben wird.

## Revendications

1. Procédé de production d'un produit à base de thé comprenant :
(i) la mise en contact de thé noir avec de l'acide ascorbique, ses sels ou des mélanges de ceux-ci, un agent oxydant et de l'eau pendant une durée d'au moins 5 minutes ; suivie par
(ii) le séchage pour préparer un produit à base de thé qui peut être infusé dans de l'eau de 5 à 100°C.

2. Procédé selon la revendication 1, dans lequel le thé noir est mis en contact avec des solutions aqueuses de l'acide ascorbique, ses sels ou des mélanges de ceux-ci et de l'agent oxydant.

3. Procédé selon la revendication 1 ou la revendication 2, dans lequel l'acide ascorbique, ses sels ou mélanges de ceux-ci est présent en une quantité de 1 à 8 % en poids de thé noir.

4. Procédé selon la revendication 3, dans lequel l'acide ascorbique, ses sels ou mélanges de ceux-ci est présent en une quantité de 2 à 4 % en poids de thé noir.

5. Procédé selon l'une quelconque des revendications 1 à 4, dans lequel l'agent oxydant est présent en une quantité de 0,3 à 7 % en poids de thé noir.

6. Procédé selon la revendication 5, dans lequel l'agent oxydant est présent en une quantité de 0,3 à 5 % en poids de thé noir.

7. Procédé selon l'une quelconque des revendications 1 à 6, dans lequel l'agent oxydant est choisi parmi un ou plusieurs du peroxyde d'hydrogène, du peroxyde de calcium, du peroxyde de magnésium, de l'oxygène, d'une enzyme qui peut libérer du peroxyde d'hydrogène.

8. Procédé selon la revendication 7, dans lequel l'agent oxydant est le peroxyde d'hydrogène.

9. Procédé selon l'une quelconque des revendications 1 à 8, dans lequel l'agent oxydant est ajouté après l'addition de l'acide ascorbique, de ses sels ou des mélanges de ceux-ci au thé noir.

10. Procédé selon l'une quelconque des revendications 1 à 9, dans lequel le thé noir est mis en contact avec l'acide ascorbique, ses sels ou des mélanges de ceux-ci et l'agent oxydant pendant une durée d'incubation de 5 minutes à 24 heures.

11. Procédé selon l'une quelconque des revendications 1 à 10, dans lequel l'eau est chauffée à une température de 10 à 60°C avant la mise en contact avec le thé noir.

12. Procédé selon l'une quelconque des revendications 1 à 11, dans lequel le thé noir est séché jusqu'à une teneur en humidité inférieure à 5 %.

13. Procédé selon l'une quelconque des revendications 1 à 12, dans lequel le produit à base de thé peut être infusé dans l'eau de 5 à 30°C.

14. Procédé selon l'une quelconque des revendications 1 à 13, dans lequel le thé noir est en outre mis en contact avec un ou plusieurs acides aminés avant séchage.

15. Procédé selon la revendication 14, dans lequel le ou les acides aminés est/sont présent(s) en une quantité de 0,1 à 8 % en poids de thé noir.

16. Procédé selon la revendication 15, dans lequel le ou les acide(s) aminé(s) est/sont présent(s) en une quantité de 0,1 à 2 % en poids de thé noir.

17. Procédé selon l'une quelconque des revendications 14 à 16 dans lequel le ou les acide(s) aminé(s) est/sont choisis parmi un ou plusieurs de : alanine, arginine, asparagine, cystine, glutamine, glycine, histidine, isoleucine, leucine, lysine, méthionine, phénylalanine, sérine, thréonine, tryptophane, tyrosine et valine.

18. Procédé selon l'une quelconque des revendications 14 à 17, dans lequel l'agent oxydant est ajouté après l'addition du ou des acides aminés au thé noir.
